Europäisches Patentamt

European Patent Office

Office européen des brevets

(19)

(11) Veröffentlichungsnummer : **0 443 323 B1**

(12) **EUROPÄISCHE PATENTSCHRIFT**

(45) Veröffentlichungstag der Patentschrift :
**10.08.94 Patentblatt 94/32**

(51) Int. Cl.$^5$ : **C03C 3/074, C03C 8/24**

(21) Anmeldenummer : **91100481.0**

(22) Anmeldetag : **17.01.91**

(54) **Blei-Zink-Borosilikatglas und Verwendung des Glases.**

(30) Priorität : **19.02.90 DE 4005011**

(43) Veröffentlichungstag der Anmeldung :
**28.08.91 Patentblatt 91/35**

(45) Bekanntmachung des Hinweises auf die
Patenterteilung :
**10.08.94 Patentblatt 94/32**

(84) Benannte Vertragsstaaten :
**CH DE FR GB LI NL SE**

(56) Entgegenhaltungen :
**US-A- 3 787 218**
**SPRECHSAAL, Band 120, Nr. 5, Mai 1987, Seiten 424,426,428,429, Coburg, DE; H.PASCHKE: "Aktiv passiviert: Passivierungsgläser"**

(56) Entgegenhaltungen :
**CHEMICAL ABSTRACTS, Band 107, Nr. 12, 21. September 1987, Seite 727,Zusammenfassung Nr. 107524d, Columbus, Ohio, US; & JP-A-61 294 803 (HITACHI) 25-12-1986**
**CHEMICAL ABSTRACTS, Band 102, Nr. 10, 11. März 1985, Seite 656, ZusammenfassungNr. 88529n, Columbus, Ohio, US; & JP-A-59 191 304 (MEIDENSHA) 30-10-1984**

(73) Patentinhaber : **Schott Glaswerke**
**Hattenbergstrasse 10**
**D-55122 Mainz (DE)**
(84) **CH DE FR LI NL SE**
Patentinhaber : **Carl-Zeiss-Stiftung trading as SCHOTT GLASWERKE**
**Hattenbergstrasse 10**
**D-55122 Mainz (DE)**
(84) **GB**

(72) Erfinder : **Ditz, Hermann**
**Kaitersbergstrasse 18**
**W-8300 Landshut (DE)**
Erfinder : **Paschke, Hartmut, Dr.**
**Bargrabenstrasse 11**
**W-8300 Ergolding (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zum Passivieren von Zinkoxid-Varistoren wird hauptsächlich Blei-Zink-Borosilikatglas verwendet. Derartige Varistoren aus Zinkoxid-Keramik zeichnen sich durch eine nichtlineare Strom-Spannungscharakteristik aus. Der Widerstand dieser Varistoren ist bei kleinen Spannungen sehr hoch und nimmt beim Überschreiten eines bestimmten Spannungswertes sehr plötzlich stark ab, so daß diese Varistoren zur Ableitung auftretender Überspannungen an Hochspannungsleitungen, in Computern sowie für viele andere Zwecke, bei welchen diese Eigenschaft vorteilhaft ist, eingesetzt werden.

Die elektrischen Eigenschaften des Varistors sind jedoch empfindlich gegenüber längerer Einwirkung von Wasserdampf, Luft und anderen Gasen. Um eine negative Änderung der Strom-Spannungscharakteristik zu verhindern, muß daher seine Oberfläche gasdicht versiegelt werden. Die günstigste und dauerhafteste Methode der Versiegelung stellt das Einkapseln in Glas dar. Das Einkapseln erfolgt in der Regel dadurch, daß auf den einzukapselnden Körper eine Schicht aus Glaspulver (gegebenenfalls in einem geeigneten Suspendiermittel) aufgetragen wird und diese Glaspulverschicht dann in einem weiteren Arbeitsschritt durch Erhitzen zu einer geschlossenen Glasschicht (Glasur) geschmolzen wird.

In US-PS 3 859 126 wird ein Blei-Zink-Boratglas zur Einkapselung von mikroelektronischen Schaltungen auf $Al_2O_3$-Substratplatten beansprucht, das 5 bis 25 Gew.-% keramische Partikel enthält, die der Reduzierung der Verschmelzspannung zwischen Substrat und Glas dienen.

Derzeit sind zum Passieren von Zinkoxid-Varistoren zwei unterschiedliche Blei-Zink-Boratgläser bekannt. Es handelt sich einmal um ein $Bi_2O_3$-haltiges Glas der Zusammensetzung (Gew.-%) 5,5 $SiO_2$; 19 $B_2O_3$; 37,6 PbO; 4,7 CuO; 22,6 ZnO; 1,3 $Al_2O_3$; 3,4 $SnO_2$; 3,9 $Bi_2O_3$ und 1,6 $MoO_3$ sowie um ein Zirkoniumdioxid-haltiges Glas der Zusammensetzung 5,2 $SiO_2$; 20 $B_2O_3$; 42 PbO; 6 CuO; 24 ZnO; 0,2 $Al_2O_3$ und 1,1 $ZrO_2$. Diese Gläser besitzen jedoch noch gewisse Nachteile, insbesondere eine recht hohe Verarbeitungstemperatur von etwa 550°C, die einen negativen Einfluß auf die Eigenschaften des Varistors haben kann, z.B. durch Verrundung der Strom-Spannungscharakteristik. Darüber hinaus haben die bekannten Gläser verhältnismäßig hohe Benetzungsrandwinkel gegenüber Zinkoxid von etwa 50 - 90° für das wismuthaltige Glas und etwa 40° - 80° für das zirkoniumhaltige Glas. Derartig hohe Benetzungsrandwinkel erschweren die Herstellung porenfreier Überzüge.

Die Aufgabe der Erfindung besteht darin, ein Blei-Zink-Borosilikatglas insbesondere zum Einkapseln von Zinkoxid-Varistoren zu finden, das gegenüber den bekannten Gläsern verbesserte Eigenschaften, insbesondere einen Benetzungsrandwinkel gegen Zinkoxid von höchstens 40° und eine Verarbeitungstemperatur von höchstens 540°C besitzt.

Diese Aufgabe wird durch das im Patentanspruch 1 beschriebene Glas gelöst.

Der Gehalt an $SiO_2$ in Gew.-% soll zwischen 4,0 und 7,0 liegen. Fällt der $SiO_2$-Anteil unter 4 Gew.-%, so steigt der Ausdehnungskoeffizient an, was zu Unverträglichkeiten zwischen dem Glas und ZnO führen kann. Ferner wird die Neigung des Glases zur Kristallisation größer. Überschreitet man einen $SiO_2$-Anteil von 7 Gew.-%, so steigt die Verarbeitungstemperatur zu stark an.

Unter Verarbeitungstemperatur versteht man die Temperatur, bei der das Glas die zum Ausbilden einer dichten, gleichmäßigen Glasur innerhalb der Verglasungszeit von ca. 20 Minuten erforderliche Viskosität besitzt. Diese Viskosität beträgt etwa $10^6$ dPa s. Die Verarbeitungstemperatur soll 540°C nicht überschreiten.

Besonders günstig ist ein $SiO_2$-Anteil von 4,5 - 5,5 Gew.-%. Der $B_2O_3$-Anteil soll zwischen 13 und 17 Gew.-% liegen. Bei Unterschreiten von 13 Gew.-% wird das Verarbeitungstemperatur-Intervall, d.h. die Temperaturdifferenz zwischen der Verarbeitungstemperatur und der Temperatur der beginnenden Kristallisation zu gering, so daß sich insgesamt eine sehr aufwendige Temperaturführung bei der Verwendung des Glases ergibt. Überschreitet man einen $B_2O_3$-Anteil von 17 Gew.-% im Glas, so besteht eine erhebliche Neigung zur Entmischung des Glases. Als besonders geeignet hat sich ein $B_2O_3$-Anteil von 14 - 15 Gew.-% gezeigt. Der Bleioxidanteil beeinflußt ebenfalls die Verarbeitungstemperatur. Sinkt der Bleioxidanteil unter 43 Gew.-%, so wird die Verarbeitungstemperatur zu hoch, gleichzeitig nimmt der elektrische Widerstand des Glases, was unerwünscht ist, ab. Wird ein Bleioxidanteil von 50 Gew.-% überschritten, so ergibt sich ein hoher Ausdehnungskoeffizient, wodurch die dilathermische Anpassung an die zu beschichtenden Bauteile im allgemeinen nicht mehr möglich ist. Besonders geeignet ist ein PbO-Gehalt von 44,5 - 48,5 Gew.-%. Das Glas hat ferner einen Zinkoxid-Anteil zwischen 24 und 29 Gew.-%. Bei Unterschreiten der unteren Bereichsgrenze steigt die Verarbeitungstemperatur zu stark an, überschreitet man die Grenze von 29 Gew.-%, so ergibt sich eine starke Kristallisationsneigung des Glases sowie ein verringertes Verarbeitungstemperaturintervall. Besonders günstig sind Zinkoxid-Gehalte zwischen 26 und 29 Gew.-%. Wird ein Kupferoxidanteil von 4 Gew.-% unterschritten, so zeigt das Glas eine schlechtere Haftung auf Zinkoxid und der Benetzungsrandwinkel gegenüber Zinkoxid nimmt zu. Des weiteren verschlechtern sich die elektrischen Eigenschaften z.B. eines einzukapselnden Varistors, was sich in einer Verrundung der Strom-Spannungscharakteristik bemerkbar macht. Kupferoxidgehalte von über 7 Gew.-% sind jedoch auch unerwünscht, da ein Glas mit einem derartig hohen Kupferoxidanteil eine starke Entmischungstendenz zeigt. Am günstigsten sind Kupferoxidanteile von 4,5 - 5,5 Gew.-%. Der Aluminiumoxidgehalt soll zwischen 1,5 und 2,5 Gew.-% liegen, da sich bei Unterschreiten dieses Bereichs ein erhöhter Ausdehnungskoeffizient, bei Überschreiten dieses Bereichs eine erhöhte Verarbeitungstemperatur einstellt.

Das Glas kann ferner noch in geringen Mengen von jeweils bis zu 3 Gew.-% die Verbindungen $SnO_2$, $Bi_2O_3$ und $MoO_3$ enthalten. Diese Zusätze verbessern die Strom-Spannungscharakteristik in Abhängigkeit von der verwendeten Keramik. Die gleiche Wirkung hat ein Zusatz von bis zu 1 Gew.-% $Cr_2O_3$. Darüberhinaus kann $Cr_2O_3$ auch eine Verbesserung des Benetzungsverhaltens und der Haftung der Glasur bewirken. Der Zusatz der Verbindungen $SnO_2$, $Bi_2O_3$, $MoO_3$ und $Cr_2O_3$ sollte jedoch insgesamt nicht unter 0,05 Gew.-% liegen, da darunter kaum noch eine Wirkung erkennbar ist.

Das Glas besitzt eine sehr günstige Verarbeitungstemperatur von weniger als 540°C, im Normalfall von weniger als 510°C und ist daher für ein schonendes Arbeiten beim Einkapseln von elektronischen Bauelementen, z.B. Widerständen, insbesondere aber zum Einkapseln von Varistoren auf Zinkoxidbasis, besonders geeignet. Weitere Vorteile des Glases sind eine verbesserte Benetzung von Zinkoxid, was sich durch einen niedrigeren Benetzungsrandwinkel bemerkbar macht. Die Haftung des Glases auf Zinkoxid ist ebenfalls sehr gut. Bei der Verwendung zum Einkapseln von elektronischen Bauelementen, insbesondere von Varistoren, kann der Varistorrohling in ein Glasrohr entsprechender Länge eingeschmolzen werden, üblich ist jedoch, auf den Rohling eine Glaspulverschicht aufzubringen, die anschließend zu einer Glasur aufgeschmolzen wird. Das Glaspulver hat dabei üblicherweise eine mittlere Korngröße im Bereich von 5 bis 25 μm und ist in einem geeigneten Suspendiermittel, z.B. einem pflanzlichen oder mineralischen Öl entsprechender Viskosität, bevorzugt jedoch Wasser mit einem geeigneten Binderzusatz, suspendiert. Das Suspendiermittel verläßt während des Aufheizvorganges zum Aufschmelzen der Glasur die Glaspulverschicht wieder rückstandsfrei.

Das Glas ist auch besonders geeignet als Sinterhilfsmittel bei der Herstellung von Zinkoxid-Keramik, z.B. bei der Herstellung von Varistoren auf ZnO-Basis. Zu diesem Zweck wird das Glas in pulverisierter Form (mittlere Korngröße unter ca 10 μm) dem zu versinternden Zinkoxid in Mengen von etwa 0,1 bis 10 Gew.-% beigemischt. Bei Gläsern, die als Sinterhilfsmittel verwendet werden, ist es besonders von Vorteil, wenn sie die bereits erwähnten Verbindungen wie $SnO_2$, $Bi_2O_3$, $MoO_3$ und/oder $Cr_2O_3$ enthalten.

Außer seiner speziellen Eignung für Zinkoxid-Keramik ist das Glas natürlich außerdem geeignet zur Verbindung von Keramiken untereinander (z.B. $Al_2O_3$, Steatit usw.) und mit Metallen (z.B. Kovar), die dilathermisch angepaßt sind, bei Temperaturen von ca. 500°C. Das Glas ist weiterhin geeignet als Grundglas für die Herstellung von Compositgläsern.

Die Gläser zeichnen sich vor allen Dingen aus durch eine niedrige Verarbeitungstemperatur von etwa 500°C, durch einen sehr hohen spezifischen elektrischen Volumenwiderstand bei einer Temperatur von 250°C von etwa $10^{10}$ bis $10^{12}$ Ω x cm. Bei der Verwendung des Glases für Glasuren ergeben sich sehr blasenarme Glasuren mit hoher Transparenz, die absolut gasdicht sind. Aufgrund des niedrigen Benetzungsrandwinkels ist die Glasur von Zinkoxid-Bauteilen besonders einfach und durch die verbesserte Haftung der Glasur auf dem Zinkoxid ergeben sich besonders widerstandsfähige Überzüge.

Beispiele:

Es wurden 7 Gläser unterschiedlicher Zusammensetzung aus üblichen Glasrohstoffen erschmolzen. Anschließend wurden die physikalischen Eigenschaften der entsprechenden Gläser ermittelt und zwar der Wärmeausdehnungskoeffizient α für den Bereich 20 - 300°C, die Transformationstemperatur Tg und die Verarbeitungstemperatur. Die Kristallisationstemperatur wurde nach der sogenannten Gradientenmethode wie folgt bestimmt: Glaspulver mit einer mittleren Körnung von etwa 10 μm wird auf ein Platinträgerblech aufgebracht und 30 Minuten lang in einem Rohrofen, über dessen Länge ein definiertes Temperaturprofil herrscht, behandelt. Anschließend wird das aufgeschmolzene Glas bei 20-facher Vergrößerung visuell beurteilt, wobei der Ort und damit verbunden die zugehörige Temperatur der beginnenden Kristallisation ermittelt wird.

Das Glas wurde ferner visuell auf Entmischungserscheinungen untersucht. Ferner wurde der elektrische Volumenwiderstand Ω x cm bei 250°C bestimmt und als Logarithmus angegeben. Die Zusammensetzung der Gläser und ihre physikalischen Eigenschaften sind in der Tabelle zusammengefaßt. Ferner wurde noch der Benetzungsrandwinkel der Gläser gegenüber ZnO bestimmt, wobei sich Werte zwischen 10° und 40° ergaben. Die Bestimmung des Benetzungsrandwinkels gegenüber ZnO erfolgte in an sich bekannter Weise unter Zuhilfenahme eines Erhitzungsmikroskops. Dazu wird ein zylindrischer Probekörper von 8 mm Durchmesser und 8 mm Höhe aus dem zu untersuchenden Glas auf einer Zinkoxidplatte als Unterlage 20 Minuten lang auf die Verarbeitungstemperatur des jeweiligen Glases erwärmt. Der Probekörper zerfließt dabei zu einem sog. Fließknopf und der am Rand des Fließknopfs sich einstellende Benetzungsrandwinkel wird gemessen. Beispiel 5 zeigt als Vergleichsbeispiel durch Schlierenbildung die starke Entmischungstendenz.

Tabelle

| Oxid | Schmelze 1 Gew.-% | Schmelze 2 Gew.-% | Schmelze 3 Gew.-% | Schmelze 4 Gew.-% | Schmelze 5 Gew.-% | Schmelze 6 Gew.-% | Schmelze 7 Gew.-% |
|---|---|---|---|---|---|---|---|
| $SiO_2$ | 4,75 | 7 | 4,75 | 4,75 | 4,66 | 4 | 6 |
| $B_2O_3$ | 14,25 | 14,25 | 14,25 | 17 | 13,97 | 13 | 16 |
| $PbO$ | 47,5 | 45,25 | 45,1 | 44,75 | 49,02 | 48,5 | 43 |
| $ZnO$ | 26,6 | 26,6 | 29,0 | 26,6 | 23,63 | 27,6 | 28,5 |
| $CuO$ | 5,0 | 5,0 | 5,0 | 5,0 | 6,86 | 5,0 | 4 |
| $Al_2O_3$ | 1,90 | 1,90 | 1,90 | 1,90 | 1,86 | 1,90 | 2,50 |
| Eigenschaften: | | | | | | | |
| $\alpha (\cdot 10^{-6} K^{-1})$ | 6,3 | 6,1 | 6,1 | 5,9 | 6,6 | 6,6 | 6,2 |
| Tg (°C) | 383 | 403 | 390 | 410 | 375 | 379 | 410 |
| Verarbeitungstemperatur (°C) | 500 | 530 | 510 | n.b. | 500 | 510 | 540 |
| Kristallisationstemp. (°C) | 570 | 580 | 540 | n.b. | 560 | 560 | 600 |
| Entmischung | keine | keine | n.b. | beginnende Entwicklung | Schlierenbildung | keine | keine |
| $\log \varsigma$ 250 | 11,34 | 10,80 | 11,2 | | | 11,20 | 9,7 |
| Benetzungsrandwinkel | 10° | 35° | 30° | 35° | 25° | 15° | 40° |

**Patentansprüche**

1. Blei-Zink-Borosilikatglas mit einem Benetzungsrandwinkel gegen ZnO von höchstens 40°, einer Verarbeitungstemperatur von höchstens 540°C und einer Zusammensetzung in Gew.-% auf Oxidbasis von

| | | | |
|---|---|---|---|
| 4,0 | – | 7,0 | $SiO_2$ |
| 13,0 | – | 17,0 | $B_2O_3$ |
| 43,0 | – | 50,0 | $PbO$ |
| 24,0 | – | 29,0 | $ZnO$ |
| 4,0 | – | 7,0 | $CuO$ |
| 1,5 | – | 2,5 | $Al_2O_3$ |

2. Blei-Zink-Borosilikatglas nach Anspruch 1 mit einer Zusammensetzung in Gew.-% auf Oxidbasis von

| | | | |
|---|---|---|---|
| 4,5 | – | 5,5 | $SiO_2$ |
| 14,0 | – | 15,0 | $B_2O_3$ |
| 44,5 | – | 48,5 | $PbO$ |
| 26,0 | – | 29,0 | $ZnO$ |
| 4,5 | – | 5,5 | $CuO$ |
| 1,5 | – | 2,5 | $Al_2O_3$ |

3. Blei-Zink-Borosilikatglas nach den Ansprüchen 1 oder 2 gekennzeichnet durch einen zusätzlichen Gehalt in Gew.-% auf Oxidbasis von wenigstens 0,05 aus der Gruppe

| | | | |
|---|---|---|---|
| 0 | – | 3 | $SnO_2$ |
| 0 | – | 3 | $Bi_2O_3$ |
| 0 | – | 3 | $MoO_3$ |
| 0 | – | 1 | $Cr_2O_3$ |

4. Verwendung des Glases nach wenigstens einem der Ansprüche 1 bis 3 zum Einkapseln von elektronischen Bauelementen, insbesondere von Varistoren auf Zinkoxid-Basis.

5. Verwendung des Glases nach wenigstens einem der Ansprüche 1 bis 3 als Sinterhilfsmittel für Zinkoxid-Keramik

**Claims**

1. Lead zinc borosilicate glass having a wetting angle to ZnO of at most 40°, a processing temperature of at most 540°C and a composition, based on oxide, in % by weight of:

| | | | |
|---|---|---|---|
| 4.0 | – | 7.0 | $SiO_2$ |
| 13.0 | – | 17.0 | $B_2O_3$ |
| 43.0 | – | 50.0 | $PbO$ |
| 24.0 | – | 29.0 | $ZnO$ |
| 4.0 | – | 7.0 | $CuO$ |
| 1.5 | – | 2.5 | $Al_2O_3$ |

2. Lead zinc borosilicate glass according to Claim 1, with a composition, based on oxide, in % by weight of:

| | | | |
|---|---|---|---|
| 4.5 | – | 5.5 | $SiO_2$ |
| 14.0 | – | 15.0 | $B_2O_3$ |
| 44.5 | – | 48.5 | PbO |
| 26.0 | – | 29.0 | ZnO |
| 4.5 | – | 5.5 | CuO |
| 1.5 | – | 2.5 | $Al_2O_3$ |

3. Lead zinc borosilicate glass according to Claim 1 or 2, characterized by an additional content, based on oxide, in % by weight of at least 0.05 of the group comprising:

| | | | |
|---|---|---|---|
| 0 | – | 3 | $SnO_2$ |
| 0 | – | 3 | $Bi_2O_3$ |
| 0 | – | 3 | $MoO_3$ |
| 0 | – | 1 | $Cr_2O_3$ |

4. Use of the glass according to at least one of Claims 1 to 3 for encapsulating electronic components, in particular varistors based on zinc oxide.

5. Use of the glass according to at least one of Claims 1 to 3, as a sintering aid for zinc oxide ceramic.

## Revendications

1. Verre borosilicaté au zinc et au plomb ayant un angle de mouillage sur de l'oxyde de zinc d'au plus 40 °, une température de mise en oeuvre d'au plus 540 °C et une composition en oxydes exprimée en % en poids de

| | |
|---|---|
| 4,0 - 7,0 | de $SiO_2$ |
| 13,0 - 17,0 | de $B_2O_3$ |
| 43,0 - 50 | de PbO |
| 24,0 - 29,0 | de ZnO |
| 4,0 - 7,0 | de CuO |
| 1,5 - 2,5 | de $Al_2O_3$ |

2. Verre borosilicaté au zinc et au plomb conforme à la revendication 1 ayant une composition en oxydes exprimée en % en poids de

| | |
|---|---|
| 4,5 - 5,5 | de $SiO_2$ |
| 14,0 - 15,0 | de $B_2O_3$ |
| 44,5 - 48,5 | de PbO |
| 26,0 - 29,0 | de ZnO |
| 4,5 - 5,5 | de CuO |
| 1,5 - 2,5 | de $Al_2O_3$ |

3. Verre borosilicaté au zinc et au plomb conforme aux revendications 1 ou 2, caractérisé par une teneur supplémentaire en oxydes choisis dans le groupe suivant, cette teneur exprimée en % en poids étant au moins égale à 0,05.

| | |
|---|---|
| 0 - 3 | de $SnO_2$ |
| 0 - 3 | de $B_2O_3$ |
| 0 - 3 | de $MoO_3$ |
| 0 - 1 | de $Cr_2O_3$ |

4. Utilisation du verre conforme à au moins une des revendications 1 à 3, pour l'encapsulation de composants électroniques, en particulier des varistors à base d'oxyde de zinc.

5. Utilisation du verre conforme à au moins une des revendications 1 à 3 comme adjuvant de frittage pour des céramiques en oxyde de zinc.